# EUROPÄISCHE PATENTANMELDUNG

(11) **EP 2 980 132 A1**
(43) Veröffentlichungstag der Anmeldung: **03.02.2016**
(21) Anmeldenummer: 14179515.3
(22) Anmeldetag: 01.08.2014
(51) Int. Cl.: C08J 5/24, B29C 70/50, B29B 15/12, B29C 67/24

(54) **Verfahren zur Herstellung getränkter Faserstrukturen**

(71) Anmelder: BASF SE, 67056 Ludwigshafen (DE); Volkswagen AG, 38440 Wolfsburg (DE)
(72) Erfinder: Die Erfindernennung liegt noch nicht vor
(74) Vertreter: Schuck, Alexander

(57) **Zusammenfassung**

Die Erfindung betrifft ein Verfahren zur Herstellung getränkter Faserstrukturen (25), umfassend folgende Schritte:
(a) Zuführen einer Faserstruktur (15) auf ein Transportband (7),
(b) Auftragen einer Monomer, gegebenenfalls Aktivator und gegebenenfalls Katalysator enthaltenden Lösung,
(c) Durchführen der Faserstruktur (15) mit der Lösung durch mindestens ein Walzenpaar (31), in dem Druck auf die Faserstruktur (15) ausgeübt wird,
(d) Abkühlen der getränkten Faserstruktur (25), so dass das Monomer erstarrt,

wobei die Monomer, gegebenenfalls Aktivator und gegebenenfalls Katalysator enthaltende Lösung in mindestens einer Linie (37) auf die Faserstruktur (15) aufgetragen wird.

## Beschreibung

Die Erfindung betrifft ein Verfahren zur Herstellung getränkter Faserstrukturen, das folgende Schritte umfasst:
(a) Zuführen einer Faserstruktur auf ein Transportband,
(b) Auftragen einer Monomer, gegebenenfalls Aktivator und gegebenenfalls Katalysator enthaltenden Lösung,
(c) Durchführen der Faserstruktur mit der Lösung durch mindestens ein Walzenpaar, in dem Druck auf die Faserstruktur ausgeübt wird,
(d) Abkühlen der Faserstruktur, so dass das Monomer erstarrt.

Getränkte Faserstrukturen finden Einsatz bei der Herstellung von Bauteilen aus verstärkten Polymeren, beispielsweise thermoplastischen Polymeren. Durch die Entkopplung der Halbzeugherstellung von der Fertigteilherstellung ist es möglich, die einzelnen Maschinenlaufzeiten zu reduzieren und zum anderen geringere Lagerkapazitäten in Anspruch zu nehmen, da die Halbzeuge, insbesondere wenn diese in Form von Flächengebilden vorliegen, deutlich weniger Platz in Anspruch nehmen als dreidimensional geformte Fertigteile.

Zur Herstellung von faserverstärkten, flachen Halbzeugen ist es zum Beispiel aus WO-A 2012/116947 bekannt, eine Faserstruktur mit einer Mischung aus geschmolzenem Lactam, Katalysator und gegebenenfalls Aktivator zu tränken, die Struktur in einem nächsten Schritt abzukühlen und die abgekühlte Faserstruktur zum faserverstärkten, flachen Halbzeug zu konfektionieren. Zum tränken der Faserstruktur werden gemäß WO-A 2012/116947 zum Beispiel Breitschlitzdüsen eingesetzt.

Ein weiteres Verfahren zur Herstellung von Verbundstoffen mit thermoplastischer Matrix ist aus WO-A 03/053661 bekannt. Hierbei wird ebenfalls eine Faserstruktur mit einer Lactamschmelze getränkt, jedoch wird die getränkte Faserstruktur anschließend aufgeheizt, um das Lactam zum Polyamid auszupolymerisieren.

Zum Tränken oder Imprägnieren der Faserstrukturen werden üblicherweise Schlitzdüsen eingesetzt. Alternativ ist auch bekannt, das Tränken in einem Tauchbad durchzuführen oder die Faserstruktur zu Besprühen, Beträufeln oder durch Rakeln zu tränken oder beschichten. Der Einsatz von Tauchbädern ist jedoch insbesondere bei Einsatz reaktiver Systeme, beispielsweise für das Tränken mit Lactam zur Polyamidherstellung nicht sinnvoll, da das Lactam bereits im Tauchbad auspolymerisieren würde. Der Einsatz von Schlitzdüsen zur Verteilung des Lactams hat den Nachteil, dass aufgrund der Düsengeometrie die Lactam enthaltende Mischung teilweise länger in der Düse verbleibt, dort beginnt auszupolymerisieren und auf diese Weise die Düse verstopft.

Aufgabe der vorliegenden Erfindung ist es daher, ein Verfahren zur Herstellung getränkter Faserstrukturen bereitzustellen, das die aus dem Stand der Technik bekannten Nachteile nicht aufweist.

Gelöst wird die Aufgabe durch ein Verfahren zur Herstellung getränkter Faserstrukturen, das folgende Schritte umfasst:
(a) Zuführen einer Faserstruktur auf ein Transportband,
(b) Auftragen einer Monomer, gegebenenfalls Aktivator und gegebenenfalls Katalysator enthaltenden Lösung,
(c) Durchführen der Faserstruktur mit der Lösung durch mindestens ein Walzenpaar, in dem Druck auf die Faserstruktur ausgeübt wird,
(d) Abkühlen der Faserstruktur, so dass das Monomer erstarrt,
wobei die Monomer, gegebenenfalls Aktivator und gegebenenfalls Katalysator enthaltende Lösung in mindestens einer Linie auf die Faserstruktur aufgetragen wird.

Der Auftrag in mindestens einer Linie auf die Faserstruktur erfolgt üblicherweise mit einer Lochdüse mit einer Öffnung mit einem geringen Durchmesser. Durch die Gestaltung der Düse kann anders als bei dem aus dem Stand der Technik bekannten Einsatz von Schlitzdüsen vermieden werden, dass sich Monomer in der Düse festsetzt und dort auspolymerisiert, so dass es zu Verstopfungen in der Düse kommt.

Erfindungsgemäß wird die Faserstruktur mit der darauf aufgetragenen Monomer, gegebenenfalls Aktivator und gegebenenfalls Katalysator enthaltenden Lösung durch das Walzenpaar geführt, bevor die Faserstruktur mit der Lösung soweit abgekühlt ist, dass die Viskosität der Lösung steigt oder das Monomer getrocknet ist. Durch die geringe Viskosität der Lösung wird auf diese Weise erreicht, dass durch das Ausüben des Drucks auf die Faserstruktur die Monomer, gegebenenfalls Aktivator und gegebenenfalls Katalysator enthaltende Lösung gleichmäßig in der Faserstruktur verteilt wird.

Der Transport der Faserstruktur kann entweder frei oder mit Hilfe eines Transportbandes erfolgen. Bevorzugt ist der Transport mit Hilfe eines Transportbandes. Hierbei wird die Faserstruktur zunächst auf ein Transportband aufgebracht und mit diesem durch die Anlage gefördert. Nicht notwendig ist der Einsatz eines Transportbandes, wenn die Faserstruktur mit einer Folie kaschiert werden soll. In diesem Fall kann die Folie zur Kaschierung als Transportband genutzt werden. Auch bei Einsatz von Faserstrukturen, die so ausgebildet sind, dass die Monomer, gegebenenfalls Aktivator und gegebenenfalls Katalysator enthaltende Lösung nach dem Auftrag und vor Erreichen des Walzenpaares nicht austropft, kann auf ein Transportband verzichtet werden. Bei Faserstrukturen, die dies nicht ermöglichen, ist jedoch der Einsatz eines Transportbandes notwendig, um die notwendige Menge an Lösung in der Faserstruktur zu halten.

Die Verteilung der Lösung in der Faserstruktur kann zum Beispiel durch Einstellung des Abstands der Walzen des Walzenpaares und damit durch Einstellung des auf die Faserstruktur mit der Lösung ausgeübten Drucks eingestellt werden.

Damit die Monomer, gegebenenfalls Aktivator und gegebenenfalls Katalysator enthaltende Lösung beim Durchführen der Faserstruktur durch das Walzenpaar gleichmäßig in der Faserstruktur verteilt wird, werden die Walzen des Walzenpaares in einer Ausführungsform der Erfindung nicht beheizt. Hierdurch wird vermieden, dass aufgrund hoher Temperatur der Walzen das Monomer beginnt zu polymerisieren, so dass dieses eine zu große Viskosität aufweist, um gleichmäßig in der Faserstruktur verteilt zu werden.

Um ein Verstopfen der Düse durch ungleichmäßige Strömungsverhältnisse zu vermeiden, ist der Öffnungsquerschnitt der Düse vorzugsweise kreisförmig gestaltet. Der Öffnungsdurchmesser der Düse zum Auftragen der Monomer, gegebenenfalls Aktivator und gegebenenfalls Katalysator enthaltenden Lösung weist vorzugsweise maximal 5 mm auf. Weiter bevorzugt ist der Öffnungsdurchmesser der Düse maximal 2 mm, besonders bevorzugt ist der Öffnungsdurchmesser der Düse maximal 1 mm und insbesondere maximal 0,5 mm.

Bei ausreichend hoher Fließgeschwindigkeit der Lösung ist der kleine Durchmesser der Düse ausreichend, um genügend Lösung in die Faserstruktur einzubringen. Wenn die Breite der Faserstruktur so groß ist, dass es nicht möglich ist, mit einer Düse ausreichend Monomer, gegebenenfalls Aktivator und gegebenenfalls Katalysator enthaltende Lösung aufzutragen, ist es weiterhin möglich, mehr als eine Düse vorzusehen.

Der Auftrag der Linie auf die Faserstruktur kann dabei so erfolgen, dass die Linie gerade, wellenförmig oder zickzackförmig verläuft.

In einer bevorzugten Ausführungsform liegt die Linie in der Mitte der Faserstruktur. Bei Auftrag mehrerer Linien ist der Abstand zwischen den einzelnen Linien vorzugsweise äquidistant und der Abstand der äußersten Linien zum Rand der Faserstruktur ist halb so groß wie der Abstand zwischen zwei Linien. Durch einen entsprechenden Auftrag der Monomer, gegebenenfalls Aktivator und gegebenenfalls Katalysator enthaltenden Lösung wird eine gleichmäßige Verteilung der Lösung in der Faserstruktur erhalten. Die Lösung kann sich gleichmäßig in der Faserstruktur verteilen und wird beim Durchführen durch das Walzenpaar gleichmäßig weiter verteilt, so dass sich in der gesamten Faserstruktur eine gleichmäßig verteilte Menge an Lösung befindet.

Wenn die Linie wellenförmig oder zickzackförmig aufgetragen wird, ist es weiterhin möglich, den Auftrag so zu gestalten, dass die Linien sich schneiden. Hierbei ist es besonders bevorzugt, wenn die jeweiligen Wendepunkte, an denen sich die Richtung des Auftrags ändert für alle sich schneidenden Linien auf einer in Transportrichtung der Faserstruktur verlaufenden Linie liegen. Wenn eine gerade Anzahl an wellenförmig oder zickzackförmig verlaufenden Linien aufgetragen wird, ist es weiterhin bevorzugt, wenn die Linien achsensymmetrisch zu einer in Transportrichtung der Faserstruktur verlaufenden Achse aufgetragen werden. Die Linien können sich hierbei schneiden oder können jeweils auf einer Seite der Symmetrieachse verlaufen. Der Auftrag kann dabei auch derart erfolgen, dass mehrere Liniensysteme mit sich jeweils überschneidenden Linien nebeneinander auf die Faserstruktur aufgetragen werden. Die einzelnen Liniensysteme können dabei achsensymmetrisch sein oder parallel verlaufende, sich überschneidende Linien aufweisen. Bevorzugt ist hierbei, dass sich die einzelnen Liniensysteme nicht berühren oder schneiden.

Für eine gleichmäßige Verteilung der Monomer, gegebenenfalls Aktivator und gegebenenfalls Katalysator enthaltenden Lösung ist es weiterhin vorteilhaft, wenn der Abstand zwischen Düse und Faserstruktur maximal 500 mm beträgt. Besonders bevorzugt ist ein Abstand zwischen Düse und Faserstruktur im Bereich von 5 bis 10 mm. Durch einen entsprechend kleinen Abstand wird vermieden, dass die Monomer, gegebenenfalls Aktivator und gegebenenfalls Katalysator enthaltende Lösung beim Auftragen verspritzt, so dass eine saubere Linie aus der Lösung auf die Faserstruktur aufgetragen wird.

In einer bevorzugten Ausführungsform beträgt der Abstand zwischen dem Auftragen der Lösung in Schritt (b) und dem Walzenpaar, durch das die Faserstruktur in Schritt (c) durchgeführt wird, maximal 3 m. Weiter bevorzugt ist ein Abstand zwischen Auftrag der Lösung und dem Walzenpaar von maximal 2 m. Besonders bevorzugt liegt der Abstand zwischen der Position, an der die Lösung aufgetragen wird und dem Walzenpaar im Bereich von 0,2 bis 1 m. Der Abstand ist dabei der Abstand zwischen dem Punkt, an dem die Lösung auf die Faserstruktur auftrifft, und dem Schnittpunkt der Verbindungslinie der Mittelpunkte der Walzen des Walzenpaares mit der Faserstruktur.

Bei einem Auftrag der Lösung gemäß dem erfindungsgemäßen Verfahren wird eine gleichmäßige Verteilung der Lösung in der Faserstruktur nur dann erzielt, wenn die Viskosität der Lösung hinreichend niedrig ist. Bevorzugt ist es daher, wenn die Monomer, gegebenenfalls Aktivator und gegebenenfalls Katalysator enthaltende Lösung eine Viskosität im Bereich von 5 bis 500 mPas aufweist. Besonders bevorzugt ist eine Viskosität der Lösung im Bereich von 10 bis 100 mPas und insbesondere im Bereich von 15 bis 40 mPas.

Eine weitere Einstellung der Viskosität ist möglich, wenn im Bereich der Aufgabestelle der Lösung unterhalb der Faserstruktur eine temperierbare Transportwalze vorgesehen wird. Wenn ein Transportband vorgesehen ist, wird das Transportband über die temperierbare Transportwalze geführt. Ohne Transportband kommt die Faserstruktur direkt mit der temperierbaren Transportwalze in Kontakt. Die Temperatur der temperierbaren Transportwalze wird entsprechend der für die Druckausübung in Schritt (c) gewünschten Viskosität eingestellt und liegt im Bereich von -30 bis 100 °C, bevorzugt im Bereich von 0 bis 90 °C und insbesondere im Bereich von Raumtemperatur bis 80 °C. Die Temperatur wird dabei um so höher gewählt, je geringer die Viskosität der Lösung sein soll.

Um zu vermeiden, dass Lactam beim Auftragen auskristallisiert, ist es weiterhin möglich, die Faserstruktur vor dem Aufbringen der Monomer, gegebenenfalls Aktivator und gegebenenfalls Katalysator enthaltenden Lösung aufzuheizen, bevorzugt auf eine Temperatur oberhalb der Schmelztemperatur des Lactams.

Der Abstand der Walzen des Walzenpaares zur Ausübung von Druck auf die Faserstruktur wird in Abhängigkeit von der Dicke der Faserstruktur und der Menge an Monomer, gegebenenfalls Aktivator und gegebenenfalls Katalysator enthaltender Lösung gewählt. Je größer die Menge an Lösung ist und je geringer der notwendige Druck für eine gleichmäßige Verteilung der Lösung gewählt werden kann, desto größer kann der Abstand zwischen den Walzen gewählt werden. Der Abstand der Walzen wird vorzugsweise so gewählt, dass der Abstand der Walzen des Walzenpaares dem 1 bis 1,5 fachen der Dicke der Faserstruktur entspricht.

Wenn ein Transportband für den Transport der Faserstruktur vorgesehen ist, ist das Walzenpaar zur Druckausübung in Schritt (c) vorzugsweise so positioniert, dass die Faserstruktur mitsamt dem Transportband durch das Walzenpaar geführt wird. Hierbei muss der Abstand zwischen den Walzen des Walzenpaares so groß gewählt werden, dass die Dicke des Transportbandes mit berücksichtigt wird, so dass der Abstand der Walzen dem 1 bis 1,5 fachen der Dicke der Faserstruktur plus der Dicke des Transportbandes entspricht. Auf diese Weise wird auch bei Verwendung eines Transportbandes der gewünschte Druck auf die Faserstruktur erzielt, der für eine gleichmäßige Verteilung der Lösung benötigt wird.

Die Fließgeschwindigkeit der Monomer, gegebenenfalls Aktivator und gegebenenfalls Katalysator enthaltenden Lösung und die Transportgeschwindigkeit der Faserstruktur werden vorzugsweise so gewählt, dass nach dem Durchlaufen der getränkten Faserstruktur durch das Walzenpaar in Schritt (c) der Anteil an Fasern in der getränkten Faserstruktur 20 bis 70 Vol.-% beträgt. Besonders bevorzugt ist es, wenn der Anteil an Fasern in der getränkten Faserstruktur im Bereich von 30 bis 60 Vol.-5 liegt und insbesondere im Bereich von 40 bis 55 Vol.-%. Der Anteil an Fasern ist dabei abhängig vom gewünschten Einsatz der durch das erfindungsgemäße Verfahren hergestellten getränkten Faserstruktur.

Das erfindungsgemäße Verfahren eignet sich insbesondere zur Herstellung von monomergetränkten Faserstrukturen, die in einem späteren Prozess zu einem Bauteil aus einem faserverstärkten Polymer weiterverarbeitet werden können. Besonders bevorzugt ist es, mit dem Verfahren monomergetränkte Faserstrukturen herzustellen, die zur Herstellung von Bauteilen aus faserverstärkten thermoplastischen Polymeren, insbesondere aus faserverstärkten Polyamiden eingesetzt werden können. Hierzu ist das Monomer vorzugsweise ausgewählt aus der Gruppe der Lactame, gegebenenfalls gemischt mit bis zu 50 Vol.-% Monomeren aus der Gruppe der Lactone.

Das Monomer wird bevorzugt ausgewählt aus der Gruppe umfassend Caprolactam, Piperidon, Pyrrolydon, Lauryllactam oder deren Mischungen. Besonders bevorzugt wird ein Monomer eingesetzt, das ausgewählt ist aus der Gruppe umfassen Caprolactam, Lauryllactam und deren Mischungen.

Wenn zusätzlich Lactone zugemischt werden, so werden diese bei der Polymerisierung zum Polyamid mit dem Monomer, das ausgewählt ist aus der Gruppe der Lactame, copolymerisiert. Als Lacton wird bevorzugt Caprolacton eingesetzt.

Als optionaler Aktivator eigenen sich unter anderem aliphatische Diisocyanate wie Butylendiisocyanat, Hexamethylendiisocyanat, Octamethylendiisocyanat, Decamethylendiisocyanat, Undecamethylendiisocyanat, Dodecamethylendiisocyanat, oder auch aromatische Diisocyanate wie Toluyldiisocyanat, Isophorondiisocyanat, 4,4'-Methylenbis(phenyl-isocyanat), 4,4'-Methylenbis(cyclohexylisocyanat) oder Polyisocyanate wie Isocyanurate von Hexamethylendiisocyanat, beispielsweise erhältlich als Basonat® HI 100 der BASF SE, Allophanate wie Ethylallophanat, oder deren Mischungen. Bevorzugt als Aktivator sind Hexamethylendiisocyanat, Isophorondiisocyanat, insbesondere Hexamethylendiisocyanat. Die Diisocyanate können durch Monoisocyanate ersetzt werden.

Alternativ eignen sich als Aktivator aliphatische Disäurehalogenide wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid als auch aromatische Disäurehalogenide wie Toluylsäurechlorid, Toluylsäurebromid, Isophorondisäurechlorid, Isophorondisäurebromid, 4,4'-Methylenbis(phenylsäurechlorid), 4,4'-Methylenbis(phenylsäurebromid), 4,4`-Methylenbis(cyclohexylsäurechlorid), 4,4`-Methylenbis(cyclohexylsäurebromid), oder deren Mischungen, bevorzugt Hexamethylendisäurechlorid, Hexamethylendisäurebromid oder deren Mischungen, besonders bevorzugt Hexamethylendisäurechlorid. Die Disäurehalogenide können durch Monosäurehalogenide ersetzt werden.

Als optionaler Katalysator eignen sich zum Beispiel Natriumcaprolactamat, Kaliumcaprolactamat, Bromidmagnesiumcaprolactamat, Chloridmagnesiumcaprolactamat, Magnesiumbiscaprolactamat, Natriumhydrid, Natriummetall, Natriumhydroxid, Natriummethoxid, Natriumethoxid, Natriumpropoxid, Natriumbutoxid, Kaliumhydrid, Kaliummetall, Kaliumhydroxid, Kaliummethoxid, Kaliumpropoxid, Kaliumbutoxid, bevorzugt Natriumhydrid, Natriummetall, Natriumcaprolactamat, besonders bevorzugt Natriumcaprolactamat, zum Beispiel erhältlich al Bruggolen® C 10, eine Lösung aus 18 Gew.-% Natriumcaprolactamat in Caprolactam).

Das Molverhältnis von Lactam zum Katalysator kann in weiten Grenzen variiert werden und beträgt in der Regel 1:1 bis 10 000:1, bevorzugt 10:1 bis 1 000:1, besonders bevorzugt 50:1 bis 300:1.

Das Molverhältnis von Aktivator zum Katalysator kann ebenfalls in weiten Grenzen variiert werden und beträgt in der Regel 100:1 bis 1:10 000, bevorzugt 10:1 bis 1:100, besonders bevorzugt 1:1 bis 1:10.

Neben dem Katalysator und dem Aktivator kann das Lactam noch weitere Additive enthalten. Die weiteren Additive werden zur Einstellung der Eigenschaften des aus dem Lactam hergestellten Polyamids zugegeben. Übliche Additive sind zum Beispiel Weichmacher, Schlagzähmodifizierer, Vernetzer, Farbstoffe oder Flammschutzmittel. Hierbei können die üblicherweise bei der Herstellung von Polyamiden eingesetzten Additive verwendet werden.

Damit die Viskosität der Monomer, gegebenenfalls Aktivator und gegebenenfalls Katalysator enthaltenden Lösung für die gleichmäßige Verteilung in der Faserstruktur ausreichend niedrig ist, ist es bevorzugt, wenn die Lösung mit einer Temperatur im Bereich von 80 bis 120 °C aufgetragen wird. Das Walzenpaar, mit dem der Druck auf die Faserstruktur mit der darauf aufgetragenen Lösung ausgeübt wird, weist vorzugsweise eine Temperatur von maximal 100 °C auf, besonders bevorzugt weist das Walzenpaar eine Temperatur im Bereich von 40 bis 60 °C auf.

Die Faserstruktur im Rahmen der vorliegenden Erfindung ist zum Beispiel ein Gewebe, Gelege, Vlies, Gestrick, Gewirk oder Geflecht oder ist aus Rovings aufgebaut. Das Gewebe, Gelege, Vlies, Gestrick oder Geflecht oder die aus Rovings aufgebaute Faserstruktur kann dabei in einer oder in mehreren Lagen eingesetzt werden. Bevorzugt ist mehr als eine Lage. Gelege im Rahmen der vorliegenden Erfindung umfassen eine oder mehrere Lagen aus parallel ausgerichteten Fasern, Garnen, Zwirnen oder Seilen, wobei die einzelnen Lagen der parallel ausgerichteten Fasern, Garne, Zwirne oder Seile zueinander gedreht sein können. Bevorzugt liegt die Faserstruktur als Gewebe oder Gelege vor.

Wenn bei Gelegen die Lagen parallel ausgerichteter Fasern, Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder einem Vielfachen von vier Lagen um einen Winkel von 45° zueinander gedreht. Weiterhin ist es auch möglich, mehr als eine Lage an Fasern mit gleicher Ausrichtung vorzusehen. Hierbei können ebenfalls Lagen zueinander verdreht sein, wobei die Anzahl an Lagen mit Fasern gleicher Ausrichtung in jeder der Ausrichtungen der Fasern unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern einer ersten Lage angeordnet sind und weiterhin Fasern einer dritten Lage um 45° gedreht zu den Fasern der zweiten Lage.

Besonders bevorzugt zur Herstellung der getränkten Faserstruktur werden Faserstrukturen mit 2 bis 10 Lagen, insbesondere 2 bis 6 Lagen eingesetzt.

Die Fasern der Faserstruktur sind vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Basalt, Bor, Siliciumcarbid, Kaliumtitanat, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone und Polyetherimide. Besonders bevorzugt sind Glasfasern, Kohlenstofffasern, Aramidfasern, Stahlfasern, Kaliumtitanatfasern, Basaltfasern, Keramikfasern und/oder sonstige hinreichend temperaturbeständige polymere Fasern oder Fäden.

Die Faserstruktur kann zusätzlich mit einer Schlichte vorbehandelt sein, um eine bessere Haftung der Monomer, gegebenenfalls Aktivator und gegebenenfalls Katalysator enthaltenden Lösung zu erhalten. Zusätzlich wird durch den Einsatz der Schlichte auch die Haftung des Polymeren nach dem Ausreagieren des Monomeren zum Polymer verbessert. Die Vorbehandlung mit der Schlichte kann dabei bereits bei der Herstellung der Faserstruktur oder sogar bereits bei der Faserherstellung erfolgen.

Aufgrund der Feuchtigkeitsempfindlichkeit der mit Lactam getränkten Faserstruktur ist es bevorzugt, die Faserstruktur zu kaschieren. Hierzu werden üblicherweise Polymerfolien oder Metallfolien eingesetzt.

Um die Faserstruktur zu kaschieren ist es zum Beispiel möglich, die Faserstruktur vor dem Aufbringen der Monomer, gegebenenfalls Aktivator und gegebenenfalls Katalysator enthaltenden Lösung auf eine Folie aufzubringen. Als Folie eignet sich zum Beispiel eine Polyamidfolie. Der Einsatz der Folie hat den weiteren Vorteil, dass hierdurch qualitativ hochwertige Oberflächen hergestellt werden können, die zum Beispiel als sichtbare Oberfläche eingesetzt werden können. Weiterhin ist es auch möglich, wie bereits vorstehend beschrieben, die Folie als Transportband zu nutzen.

Zum Kaschieren wird in einer Ausführungsform vor oder nach dem Durchlaufen des Walzenpaares, bevorzugt vor dem Durchlaufen des Walzenpaares eine Folie, bevorzugt ebenfalls eine Polyamidfolie, auf die Faserstruktur mit der aufgetragenen Lösung aufgebracht. Hierdurch wird ebenfalls eine qualitativ hochwertige Oberfläche erhalten, die als sichtbare Oberfläche genutzt werden kann. Besonders bevorzugt wird die Folie auf die Faserstruktur dann aufgebracht, wenn die Faserstruktur vor dem Aufbringen der Lösung auf eine Folie aufgelegt worden ist. Hierdurch ist sowohl auf der Unterseite als auch auf der Oberseite der getränkten Faserstruktur eine Folie aufgebracht, so dass beide Seiten der Faserstruktur eine hochwertige Oberfläche aufweisen, die als sichtbare Oberfläche genutzt werden kann.

Neben einer Polyamidfolie kann auch jede beliebige andere Polymerfolie oder Metallfolie genutzt werden. Jedoch ist es lediglich bei Verwendung von Polyamidfolien oder Polyesterfolien möglich, die Folie auch bei der Weiterverarbeitung der getränkten Faserstruktur mitzuverarbeiten. Folien aus allen anderen Materialien müssen vor der Weiterverarbeitung entfernt werden.

Zusätzlich oder alternativ zum Aufbringen der Folie ist es möglich, die getränkte Faserstruktur nach dem Abkühlen zu konfektionieren und dann in Folien einzuschweißen. Dies ermöglicht einerseits den Schutz der konfektionierten getränkten Faserstruktur und andererseits kann hierdurch eine weitere Verbesserung der Oberfläche erhalten werden.

Das Kaschieren hat den weiteren Vorteil, dass kein Wasser, das den Katalysator deaktivieren kann, in die getränkte Faserstruktur eindiffundieren kann. Durch das Einschweißen der konfektionierten getränkten Faserstruktur wird dieser Effekt weiter verstärkt. Zudem werden durch das Einschweißen auch die Schmalseiten der getränkten Faserstruktur verschlossen, so dass auch hier kein Wasser eindringen kann. Hierdurch wird die Lagerfähigkeit des Halbzeugs erhöht.

Als Folie, in die die konfektionierte getränkte Faserstruktur eingeschweißt wird, kann jede beliebige Folie, die wasserundurchlässig ist, eingesetzt werden. Bevorzugt werden Polyamidfolien oder Polyesterfolien eingesetzt. Wenn Folien aus einem Material eingesetzt werden, das verschieden ist von Polyamid oder Polyester, ist es - wie bei der zum Kaschieren verwendeten Folie - im Allgemeinen notwendig, die Folie von der getränkten Faserstruktur vor der Weiterverarbeitung zu entfernen. Die Verwendung von Polyamidfolie und gegebenenfalls von Polyesterfolie, die die Weiterverarbeitung mitsamt der Folie erlaubt, ermöglicht eine einfachere Handhabung, die insbesondere im großtechnischen Bereich gewünscht ist.

Die durch das erfindungsgemäße Verfahren hergestellte getränkte Faserstruktur kann dann in einem weiteren Verfahren zu einem fertigen Bauteil weiterverarbeitet werden. Hierzu ist es zum Beispiel möglich, die getränkte Faserstruktur in eine Form einzulegen, in der die getränkte Faserstruktur zum Bauteil umgeformt wird. Geeignete Verfahren zum Umformen sind zum Beispiel Tiefziehverfahren oder Pressverfahren.

Zum Herstellen des Bauteils wird die getränkte Faserstruktur in der Form auf eine Temperatur geheizt, bei der das Monomer, insbesondere das Lactam, zum Polymer, insbesondere zum Polyamid, polymerisiert. Die Temperatur der Form liegt dabei vorzugsweise im Bereich von 100 bis 200 °C, mehr bevorzugt im Bereich von 120 bis 180 °C und insbesondere im Bereich von 140 bis 179 °C. Der in dem Lactam enthaltene Katalysator katalysiert die anionische Polymerisation zum Polyamid und bleibt nach der Polymerisation im hergestellten Polyamid enthalten.

Ein Ausführungsbeispiel der Erfindung ist in den Figuren dargestellt und wird in der nachfolgenden Beschreibung näher erläutert.

Es zeigen:
- Figur 1: eine schematische Darstellung des erfindungsgemäßen Verfahrens zur Herstellung einer getränkten Faserstruktur,
- Figur 2: eine Draufsicht auf die Faserstruktur zwischen Auftragen der Monomer, gegebenenfalls Aktivator und gegebenenfalls Katalysator enthaltenden Lösung und dem Walzenpaar,
- Figur 3: eine Draufsicht auf die Faserstruktur zwischen Auftrag der Monomer enthaltenden Lösung und dem Walzenpaar bei Auftrag der Lösung in zickzackförmig verlaufenden Linien,
- Figur 4: eine Draufsicht auf eine Faserstruktur mit Auftrag der Monomer enthaltenden Lösung in zwei Liniensystemen,
- Figur 5: eine Draufsicht auf eine Faserstruktur mit Auftrag der Monomer enthaltenden Lösung in mehreren sich überschneidenden Linien.

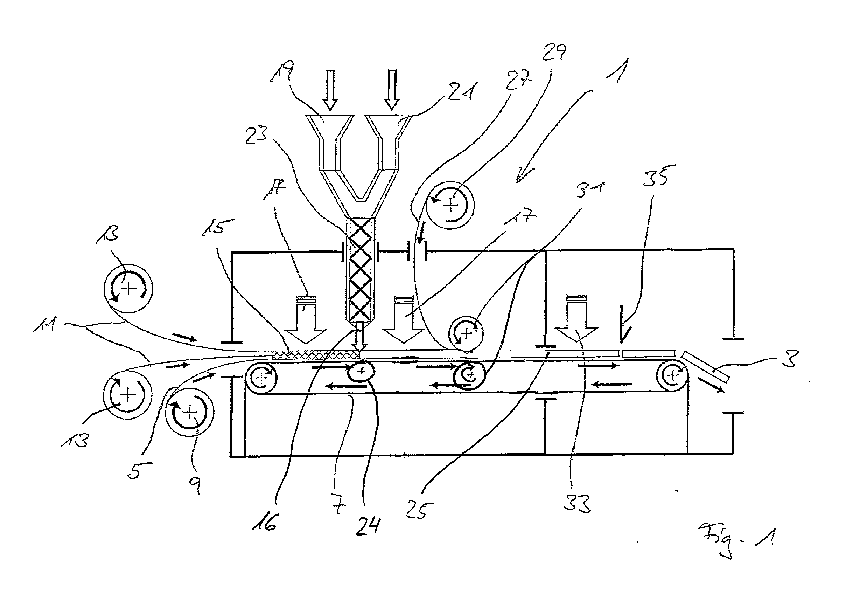

Figur 1 zeigt eine schematische Darstellung des erfindungsgemäßen Verfahrens zur Herstellung einer getränkten Faserstruktur.

Einer Vorrichtung 1 zur Herstellung einer getränkten Faserstruktur wird eine erste Folie 5 zugeführt. Die erste Folie 5 wird in der hier dargestellten Ausführungsform auf ein Transportband 7 aufgelegt. Als Transportband 7 eignet sich jedes beliebige, dem Fachmann bekannte Transportband, mit dem die Folie 5 eben transportiert werden kann. Die Oberfläche des Transportbandes 7 ist dabei so gestaltet, dass die Folie 5 durch die Bewegung des Transportbandes 7 und beim Auflegen auf das Transportband 7 nicht beschädigt wird. Um das Verfahren kontinuierlich betreiben zu können, ist die Folie 5 auf einer Rolle 9 bevorratet, von der diese abgewickelt und der Vorrichtung 1 zugeführt wird.

In der hier dargestellten Ausführungsform werden auf der Folie 5 zwei Lagen Fasern 11 abgelegt. Die Fasern 11 können dabei als Gewebe, Gewirk, Gestrick, Gelege, Vlies oder als parallel ausgerichtete Fasern, Garne, Zwirne oder Seile vorliegen. Wenn parallel ausgerichtete Fasern eingesetzt werden, so ist es bevorzugt, die Fasern der einzelnen Lagen zueinander gedreht, bevorzugt um 90° zueinander gedreht auszurichten. Die Zugabe der Fasern 11 erfolgt ebenfalls kontinuierlich, wobei die Fasern 11 auf einer Rolle 13 bevorratet sind. Die auf der Folie 5 abgelegten Fasern 11 bilden die zu tränkende Faserstruktur 15.

Um eine gleichmäßige Benetzung der Fasern der Faserstruktur 15 mit Lactam zu erhalten, wird die Faserstruktur 15 vorzugsweise erwärmt. Die Wärmezufuhr ist in Figur 1 mit Pfeilen 17 dargestellt. Nach dem Erwärmen wird auf die Faserstruktur 15 geschmolzenes Lactam aufgetragen. Das geschmolzene Lactam enthält vorzugsweise mindestens einen Katalysator, der die anionische Polymerisation zu Polyamid katalysiert sowie gegebenenfalls mindestens einen Aktivator. Zusätzlich können auch noch weitere Additive, mit denen die Eigenschaften eines aus dem Lactam hergestellten Polyamids beeinflusst werden können, enthalten sein. Die Temperatur, auf die die Faserstruktur 15 erwärmt wird, entspricht vorzugsweise der Schmelztemperatur des eingesetzten Lactams. Bevorzugt liegt die Temperatur im Bereich von 70 bis 90°C. Bei der Erwärmung ist darauf zu achten, dass die Temperatur des geschmolzenen Lactams und die Temperatur, auf die die Faserstruktur 15 erwärmt wird, unterhalb der Starttemperatur für die anionische Polymerisation des Lactams gehalten werden. Erfindungsgemäß wird zum Auftragen des geschmolzenen Lactams eine Düse 16 eingesetzt, die das Lactam in Form einer schmalen Linie auf die Faserstruktur 15 aufträgt. Die Düse 16 hat dabei vorzugsweise eine kreisförmige Düsenöffnung mit einem Durchmesser von maximal 2 mm. Die Linie verläuft dabei vorzugsweise parallel zu den seitlichen Rändern der Faserstruktur 15. Bei einer großen Breite der Faserstruktur 15 oder wenn die Menge an Lactam, die durch eine Düse 16 zugeführt wird, nicht groß genug ist, um auf die Faserstruktur 15 soviel Lactam aufzutragen, wie für die Herstellung der getränkten Faserstruktur 3 gewünscht ist, können auch mehrere Düsen 16, die parallel nebeneinander, vorzugsweise mit gleichen Abständen, angeordnet sind, eingesetzt werden.

In der hier dargestellten Ausführungsform wird über einen ersten Zulauf 19 aufgeschmolzenes Lactam mit Aktivator und über einen zweiten Zulauf 21 aufgeschmolzenes Lactam mit Katalysator einer Mischeinheit 23 zugegeben. Die Mischeinheit kann zum Beispiel als Extruder oder auch als statischer Mischer gestaltet sein. In der Mischeinheit wird eine homogene Mischung des Lactams mit Aktivator und Katalysator erzeugt. Das geschmolzene, Aktivator und Katalysator enthaltende Lactam wird durch die Düse 16 auf die textile Struktur 15 aufgetragen.

Unterhalb der Düse 16 befindet sich in der hier dargestellten Ausführungsform eine Walze 24, die temperierbar ist. Vorzugsweise lässt sich die Walze 24 auf eine Temperatur im Bereich von -30°C bis 100°C temperieren. Die Temperatur der Walze 24 wird dabei so eingestellt, dass die Viskosität der durch die Düse 16 aufgetragenen Lösung so eingestellt wird, dass sich diese einerseits gleichmäßig in der Faserstruktur 15 verteilen lässt, zum anderen aber auch verhindert wird, dass das Monomer bereits an dieser Stelle zum Polymeren ausreagiert. Zudem darf die Temperatur auch nicht so niedrig gewählt werden, dass die Lösung in der Faserstruktur 15 erstarrt, da hierdurch Lunker und Fehlbildungen in dem aus der getränkten Faserstruktur herzustellenden Bauteil entstehen können.

Nach dem Tränken wird auf die getränkte Faserstruktur 25 in der hier dargestellten Ausführungsform eine zweite Folie 27 aufgebracht. Die zweite Folie 27 wird dabei vorzugsweise ebenso wie die erste Folie 5 von einer Rolle 29, auf der sie bevorratet ist, abgerollt.

In einem nächsten Schritt wird die getränkte Faserstruktur 25 durch ein Walzenpaar 31 geführt, in dem Druck auf die getränkte Faserstruktur 25 ausgeübt wird. Der Abstand der Walzen des Walzenpaares 31 beträgt dabei vorzugsweise das 1 bis 1,5 fache der Dicke der ungetränkten Faserstruktur 15 plus der Dicke des Transportbandes 7 und der Folie 5.

In einer hier nicht dargestellten Ausführungsform wird nach dem Tränken auf der Oberseite und/oder der Unterseite der getränkten textilen Struktur mindestens eine weitere Faserlage aufgebracht. Die zusätzlich aufgebrachten Fasern sind dabei vorzugsweise von der gleichen Art wie die Fasern 11, die die textile Struktur 15 bilden. Alternativ ist es jedoch auch möglich, dass die Fasern, die die Faserstruktur 15 bilden, zum Beispiel einzelne Lagen parallel ausgerichteter Fasern, Garne, Zwirne oder Seile sind, oder dass ein Vlies die Faserstruktur 15 bildet und die zusätzlichen Lagen Gewebe, Gewirke oder Gestricke sind.

Durch das Pressen der getränkten Faserstruktur 25 wird Lactam auch in die zusätzlich aufgebrachten Faserlagen gepresst, wodurch die zusätzlich aufgebrachten Faserlagen ebenfalls mit Lactam getränkt werden.

Nach dem Pressen wird die getränkte Faserstruktur 25 abgekühlt. Dies ist mit einem Pfeil 33 dargestellt. Durch das Abkühlen erstarrt das Lactam und es entsteht eine Faserstruktur, die festes Lactam enthält. Diese kann dann mit einem Schneidwerkzeug 35, beispielsweise einem Messer, einer Stanze oder einer Säge, zu einem faserverstärkten, flachen Halbzeug 3 konfektioniert werden.

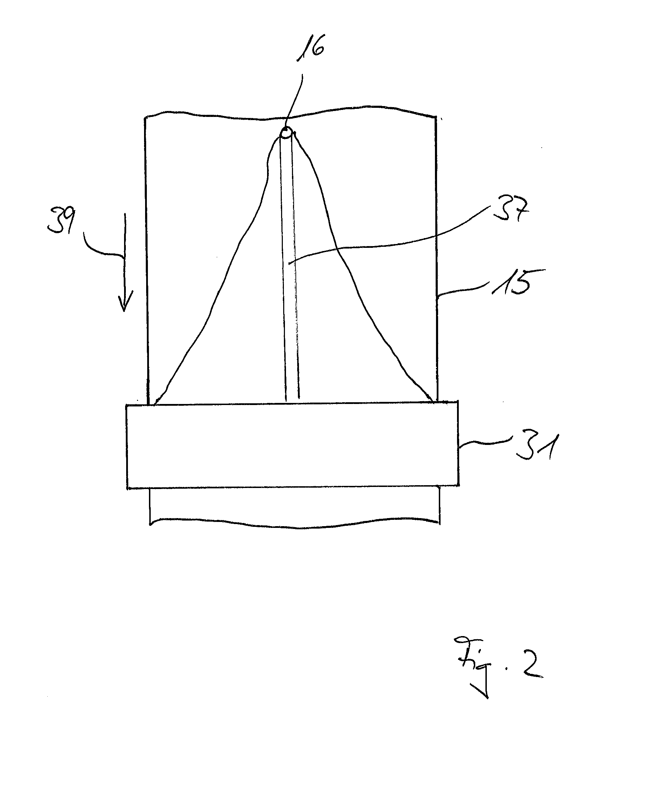

In Figur 2 ist eine Draufsicht auf die Faserstruktur zwischen Auftragen der Monomer, gegebenenfalls Aktivator und gegebenenfalls Katalysator enthaltenden Lösung und dem Walzenpaar gezeigt.

Der Draufsicht in Figur 2 lässt sich entnehmen, wie die Monomer, gegebenenfalls Aktivator und gegebenenfalls Katalysator enthaltende Lösung zunächst durch die Düse 16 in Form einer Linie 37 auf die Faserstruktur 15 aufgetragen wird. Aufgrund der Porosität der Faserstruktur 15 und der geringen Viskosität der Lösung verläuft die Lösung in der Faserstruktur 15 und verteilt sich über die Breite der Faserstruktur 15. Beim Durchlaufen durch das Walzenpaar 31 wird die Lösung dann noch in die Bereiche der Faserstruktur 15 gepresst, die zuvor unbenetzt gewesen sind. Die Transportrichtung der Faserstruktur 15 ist mit einem Pfeil 39 dargestellt.

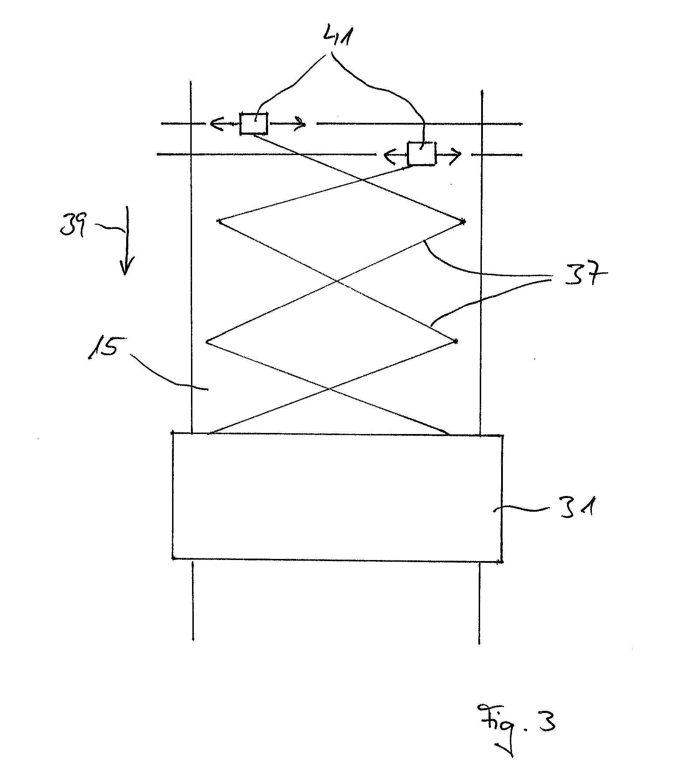

Eine alternative Ausführungsform zum Auftrag der Linien aus der Monomer, gegebenenfalls Aktivator und gegebenenfalls Katalysator enthaltenden Lösung ist in Figur 3 dargestellt.

Im Unterschied zu der in Figur 2 dargestellten Ausführungsform erfolgt bei der in Figur 3 dargestellten Ausführungsform der Auftrag der Linien 37 zickzackförmig. Die Linien schneiden sich dabei in einer mittig auf der Faserstruktur 15 verlaufenden Symmetrieachse und die Punkte, an denen sich die Auftragsrichtung endet liegen für beide Linien 37 jeweils auf einer in Transportrichtung 39 verlaufenden Linie. Um den zickzackförmigen Auftrag realisieren zu können, ist es zum Beispiel möglich, die Düsen 16 jeweils in einer Lineareinheit 41 aufzunehmen, wobei für den symmetrischen Auftrag die Lineareinheiten 41 gegenläufig quer zur Transportrichtung 39 der Faserstruktur 15 bewegt werden.

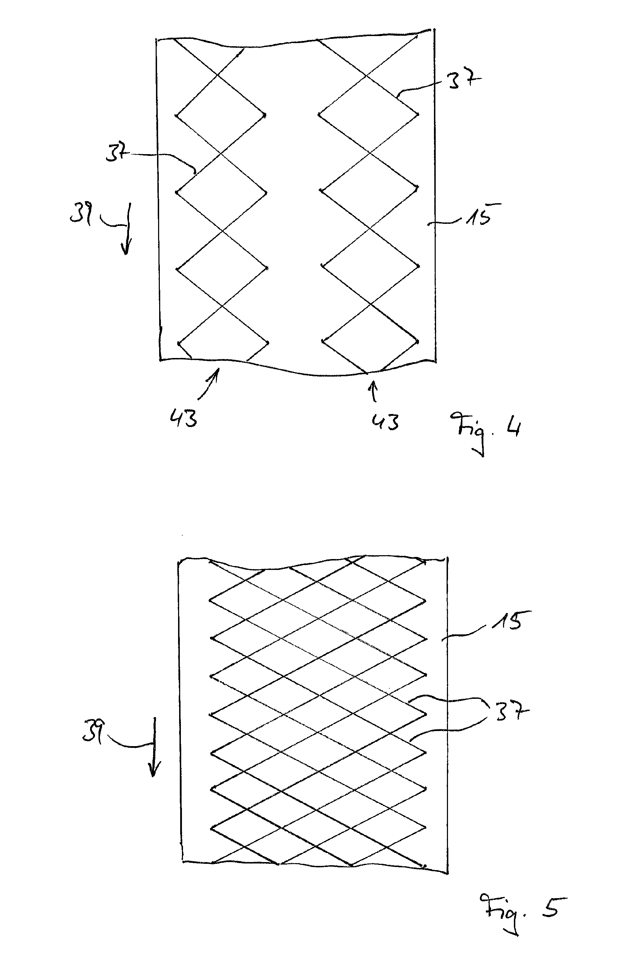

Weitere alternative Möglichkeiten, in welcher Form die Monomer, gegebenenfalls Aktivator und gegebenenfalls Katalysator enthaltende Lösung aufgetragen werden kann, sind in den Figuren 4 und 5 dargestellt.

Bei der in Figur 4 dargestellten Ausführungsform wird die Monomer, gegebenenfalls Aktivator und gegebenenfalls Katalysator enthaltende Lösung in zwei Liniensystemen 43 auf die Faserstruktur 15 aufgetragen. In der hier dargestellten Ausführungsform umfasst jedes Liniensystem 43 zwei sich überschneidende und achsensymmetrisch verlaufende zickzackförmige Linien 37. Die einzelnen Liniensysteme 43 sind hier ebenfalls symmetrisch zu einer in Transportrichtung der Faserstruktur verlaufenden Symmetrieachse, wobei sich die Liniensysteme 43 jedoch nicht berühren oder schneiden.

In der in Figur 5 dargestellten Ausführungsform wird die Monomer, gegebenenfalls Aktivator und gegebenenfalls Katalysator enthaltende Lösung in mehreren parallel verlaufenden zickzackförmigen Linien 37 aufgetragen, wobei sich die einzelnen Linien 37 jeweils schneiden und die Punkte, an denen sich die Richtung der Linien ändert jeweils für alle Linien auf einer in Transportrichtung 39 der Faserstruktur liegenden Linie liegen.

Neben den hier dargestellten Varianten zum Auftrag der Monomer, gegebenenfalls Aktivator und gegebenenfalls Katalysator enthaltenden Lösung ist auch jede weitere Variante und Kombination der hier dargestellten Varianten denkbar. Zudem können die Linien anstelle des zickzackförmigen Verlaufs auch einen wellenförmigen Verlauf aufweisen.

Zur Herstellung von Bauteilen wird das faserverstärkte, flache Halbzeug in eine Form eingelegt, die auf eine Temperatur geheizt ist, bei der das Lactam anionisch zu dem Polyamid auspolymerisiert. Durch das Erwärmen auf eine Temperatur oberhalb der Starttemperatur der anionischen Polymerisation polymerisiert das Lactam, mit dem die textilen Strukturen getränkt sind, zu dem korrespondierenden Polyamid. Durch das gleichzeitige Pressen wird das faserverstärkte, flache Halbzeug in die gewünschte Form des herzustellenden Bauteils gebracht.

Bauteile, die auf diese Weise hergestellt werden können, sind zum Beispiel Teile von Fahrzeugkarosserien, Strukturbauteile für Fahrzeuge, wie Böden oder Dächer, Komponentenbauteile für Fahrzeuge, wie Montageträger, Sitzstrukturen, Tür- oder Innenverkleidungen, aber auch Bauteile für Windkraftanlagen oder Schienenfahrzeuge.

### Bezugszeichenliste

- 1: Vorrichtung zur Herstellung faserverstärkter, flacher Halbzeuge
- 3: faserverstärktes, flaches Halbzeug
- 5: Polyamidfolie
- 7: Transportband
- 9: Rolle mit Polyamidfolie
- 11: Faser
- 13: Rolle mit Faservorrat
- 15: Faserstruktur
- 16: Düse
- 17: Wärmezufuhr
- 19: erster Zulauf
- 21: zweiter Zulauf
- 23: Mischeinheit
- 24: Walze
- 25: getränkte Faserstruktur
- 27: zweite Polyamidfolie
- 29: Rolle mit zweiter Polyamidfolie
- 31: Walzenpaar
- 33: Abkühlung
- 35: Schneidwerkzeug
- 37: Linie
- 39: Transportrichtung der Faserstruktur 15
- 41: Lineareinheit
- 43: Liniensystem

## Patentansprüche

1. Verfahren zur Herstellung getränkter Faserstrukturen (25), umfassend folgende Schritte:
(a) Zuführen einer Faserstruktur (15) auf ein Transportband (7),
(b) Auftragen einer Monomer, gegebenenfalls Aktivator und gegebenenfalls Katalysator enthaltenden Lösung,
(c) Durchführen der Faserstruktur (15) mit der Lösung durch mindestens ein Walzenpaar (31), in dem Druck auf die Faserstruktur (15) ausgeübt wird,
(d) Abkühlen der getränkten Faserstruktur (25), so dass das Monomer erstarrt,
**dadurch gekennzeichnet, dass** die Monomer, gegebenenfalls Aktivator und gegebenenfalls Katalysator enthaltende Lösung in mindestens einer Linie (37) auf die Faserstruktur (15) aufgetragen wird.

2. Verfahren gemäß Anspruch 1, **dadurch gekennzeichnet, dass** die mindestens eine Linie (37) gerade, wellenförmig oder zickzackförmig aufgetragen wird.

3. Verfahren gemäß Anspruch 1 oder 2, **dadurch gekennzeichnet, dass** bei Auftrag einer Linie (37) die Linie (37) in der Mitte der Faserstruktur (15) liegt und bei Auftrag mehrerer Linien der Abstand zwischen den einzelnen Linien äquidistant ist und der Abstand der äußersten Linien zum Rand der Faserstruktur halb so groß ist wie der Abstand zwischen zwei Linien.

4. Verfahren gemäß Anspruch 2, **dadurch gekennzeichnet, dass** bei Auftrag einer geraden Anzahl an wellenförmig oder zickzackförmig aufgetragenen Linien die wellenförmig oder zickzackförmig aufgetragenen Linien achsensymmetrisch auf die Faserstruktur aufgetragen werden.

5. Verfahren gemäß einem der Ansprüche 2 bis 4, **dadurch gekennzeichnet, dass** sich die wellenförmig oder zickzackförmig aufgetragenen Linien schneiden.

6. Verfahren gemäß einem der Ansprüche 1 bis 5, **dadurch gekennzeichnet, dass** die Monomer, gegebenenfalls Aktivator und gegebenenfalls Katalysator enthaltende Lösung mit einer Düse (16) aufgetragen wird, die einen Öffnungsdurchmesser von maximal 5 mm aufweist.

7. Verfahren gemäß einem der Ansprüche 1 bis 6, **dadurch gekennzeichnet, dass** der Abstand zwischen dem Auftragen der Lösung in Schritt (b) und dem Walzenpaar (31), durch das die Faserstruktur (15) in Schritt (c) durchgeführt wird, maximal 3 m beträgt.

8. Verfahren gemäß einem der Ansprüche 1 bis 7, **dadurch gekennzeichnet, dass** die Monomer, gegebenenfalls Aktivator und gegebenenfalls Katalysator enthaltende Lösung eine Viskosität im Bereich von 5 bis 500 mPas aufweist.

9. Verfahren gemäß einem der Ansprüche 1 bis 8, **dadurch gekennzeichnet, dass** der Abstand der Walzen des Walzenpaares (31) dem 1 bis 1,5 fachen der Dicke der Faserstruktur (15) entspricht und bei Einsatz eines Transportbandes (7) zum Transport der Faserstruktur (15) dem 1 bis 1,5 fachen der Faserstruktur (15) plus der Dicke des Transportbandes (7), wenn das Transportband (7) mit durch das Walzenpaar (31) geführt wird.

10. Verfahren gemäß einem der Ansprüche 1 bis 9, **dadurch gekennzeichnet, dass** die Fließgeschwindigkeit der Monomer, gegebenenfalls Aktivator und gegebenenfalls Katalysator enthaltenden Lösung und die Transportgeschwindigkeit der Faserstruktur (15) so gewählt werden, dass nach dem Durchlaufen der getränkten Faserstruktur (15) durch das Walzenpaar (31) der Anteil an Fasern in der getränkten Faserstruktur (25) 20 bis 70 Vol.-% beträgt.

11. Verfahren gemäß einem der Ansprüche 1 bis 10, **dadurch gekennzeichnet, dass** das Monomer ausgewählt ist aus der Gruppe der Lactame, gegebenenfalls gemischt mit bis zu 50 Vol.-% Monomeren aus der Gruppe der Lactone.

12. Verfahren gemäß Anspruch 11, **dadurch gekennzeichnet, dass** das Lactam ausgewählt ist aus Caprolactam, Piperidon, Pyrrolydon, Lauryllactam oder deren Mischungen.

13. Verfahren gemäß Anspruch 11 oder 12, **dadurch gekennzeichnet, dass** das Lacton Caprolacton ist.

14. Verfahren gemäß einem der Ansprüche 11 bis 13, **dadurch gekennzeichnet, dass** die Lösung mit einer Temperatur im Bereich von 80 bis 120 °C aufgetragen wird und das Walzenpaar (31) eine Temperatur von maximal 100 °C aufweist.

15. Verfahren gemäß einem der Ansprüche 1 bis 14, **dadurch gekennzeichnet, dass** die Faserstruktur ein Gewebe, Gelege, Vlies, Gestrick, Gewirk oder Geflecht ist oder aus Rovings aufgebaut ist.

16. Verfahren gemäß einem der Ansprüche 1 bis 15, **dadurch gekennzeichnet, dass** die Faserstruktur Fasern enthält, die ausgewählt sind aus Glasfasern, Kohlenstofffasern, Aramidfasern, Stahlfasern, Kaliumtitanatfasern, Basaltfasern, Keramikfasern oder Mischungen daraus.
